# EUROPÄISCHE PATENTSCHRIFT

(11) **EP 1 464 544 B1**
(45) Veröffentlichungstag und Bekanntmachung des Hinweises auf die Patenterteilung: **15.09.2010**
(21) Anmeldenummer: 04007046.8
(22) Anmeldetag: 24.03.2004
(51) Int. Cl.: B60R 16/02

(54) **Gehäuse mit Stromleiterschiene für eine Trennvorrichtung**
Housing with a busbar for a separation device
Boîtier avec une barre conductrice pour un dispositif de sectionnement

(30) Priorität: 03.04.2003 DE 10315368; 11.03.2004 DE 102004011863
(43) Veröffentlichungstag der Anmeldung: 06.10.2004
(73) Patentinhaber: Delphi Technologies, Inc., Troy, MI 48007 (US)
(72) Erfinder: Knauss, Jürgen, 90587 Obermichelbach (DE); Kordel, Gerhard, 90455 Nuernberg-Kornburg (DE)
(74) Vertreter: Müller, Karl-Ernst

(56) Entgegenhaltungen:
- EP-A- 0 690 466
- EP-A- 0 863 528
- WO-A-99/54904

## Beschreibung

Die Erfindung betrifft eine pyromechanische Trennvorrichtung, insbesondere zur Batterieabschaltung in einem Kraftfahrzeug, mit einem Gehäuse, in dem eine elektrisch leitende Stromleiterschiene angeordnet ist, die von einem durch eine pyrotechnische Treibladung angetriebenen Trennmeißel an einer Trennstelle durchtrennbar ausgebildet ist, die Stromleiterschiene an ihrer dem Trennmeißel abgewandten Seite durch einen in das Gehäuse eingeschobenen Riegel eingeklemmt ist und im Riegel im Bereich der Trennstelle ein Aufnahmeraum angeordnet ist, in die der Trennmeißel den von ihm durchtrennten Bereich der Stromleiterschiene umbiegt und der Riegel eine Außenfläche des Gehäuses bildet.

Eine derartige pyromechanische Trennvorrichtung zeigt die WO 99/54904 A.

Auf Grund der mechanischen Beanspruchung/Belastung während des Trennvorganges ist eine Rissbildung von Riegel und Gehäuse nicht auszuschließen, was nur durch dickere Wandungen der einzelnen Bauteile ausgeglichen werden kann. Dies ist in der Regel mit Kosten verbunden und in der Weise nachteilig, dass das Bauteilvolumen vergrößert ist und dadurch möglicherweise der Einsatz eingeschränkt ist.

Außerdem ist nicht einfach zu kontrollieren, ob die Trennvorrichtung ausgelöst hat, d. h. eine Trennung der Stromleiterschiene erfolgt ist.

Erfindungsgemäß werden diese Nachteile durch die Merkmale des Anspruchs 1 behoben.

Dadurch, dass im Riegel eine Ausbuchtung angeordnet ist, die den Aufnahmeraum mit der Atmosphäre durchschaubar verbindet, sind Spannungen, die während des Trennvorgangs auf den Riegel und das Gehäuse einwirken, verringert, wodurch eine Rissbildung verhindert bzw. mindestens die Gefahr einer Rissbildung reduziert ist.

Außerdem ist durch die Ausbuchtung, die den Aufnahmeraum mit der Atmosphäre durchschaubar verbindet, vom Betreiber leicht festzustellen, ob eine Trennung der Stromleiterschiene erfolgt ist bzw. ob die Trennvorrichtung ausgelöst hat.

In bevorzugter erfindungsgemäßer Ausgestaltung ist die Ausbuchtung eine Bohrung.

Vorteilhafterweise ist die Ausbuchtung bzw. die Bohrung durch ein durchsichtiges Material abgedeckt. Dies hat den Vorteil, dass ein Eindringen von Fremdkörpern (Staub, Späne) über die Ausbuchtung in den Aufnahmeraum verhindert ist. Ferner ist der während des Trennvorgangs entstehende lonisationsfunke gekapselt und die Gefahr einer Selbstentzündung von durch elektrische Funken entzündlichen Stoffen ist verhindert.

Damit die Durchschaubarkeit des durchsichtigen Materials gegeben ist, ist bevorzugt das durchsichtige Material ein durchsichtiger Kunststoff oder ein durchsichtiges Glas.

Weitere Merkmale zeigen die Figuren, die nachfolgend beschrieben sind.

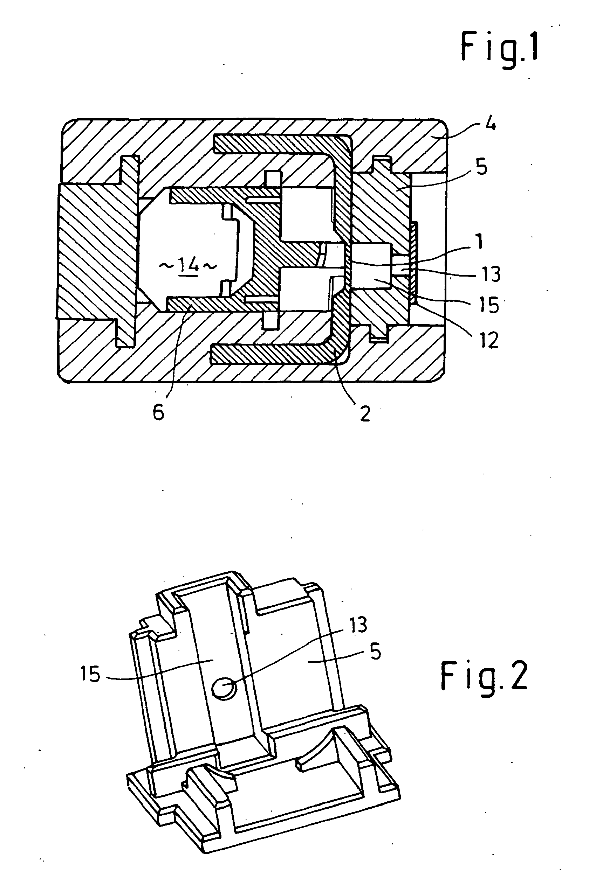

Figur 1 zeigt ein Gehäuse 4 einer Trennvorrichtung, in dem eine Stromleiterschiene 2 angeordnet ist. Im Gehäuse 4 ist ein Trennmeißel 6 axial verschiebbar angeordnet, der von einem Anzündelement 14 bzw. dessen pyrotechnischer Ladung (Treibgas) in Richtung Stromschiene 2 bewegbar ist. Zur axialen Befestigung der Stromleiterschiene 2 im Gehäuse 4 ist die Stromleiterschiene 2 durch einen Riegel 5 (siehe auch Figur 2) festgelegt. In diesem Riegel 5 ist ein Aufnahmeraum 15 eingelassen, der an die Trennstelle 1 der Stromleiterschiene 2 angrenzt und der an der zum Trennmeißel 6 entgegengesetzten Seite der Stromleiterschiene 2 angeordnet ist, so dass der Aufnahmeraum 15 sich zwischen der Stromschiene 2 und dem Riegel 5 befindet. Bei Anzündung des Anzündelements 14 wird der Trennmeißel 6 auf die Stromleiterschiene 2 hin beschleunigt und trennt die Stromleiterschiene 2 an der Trennstelle 1 durch einen Biegevorgang auf. Der abgebogene Teil der Stromschiene 2 wird hierbei in den Aufnahmeraum 15 abgebogen.

Erfindungsgemäß ist im Riegel 5 ein Ausbruch 13 in der Form einer Bohrung angeordnet, der den Aufnahmeraum 15 mit der Atmosphäre durchschaubar verbindet. So kann ein Betreiber leicht feststellen, ob die Trennvorrichtung ausgelöst hat.

Der Ausbruch 13 ist mit einem durchsichtigen Material 12 abgedeckt. Dieses Material 12 kann ein Kunststoff oder Glas sein.

Die erfindungsgemäße Trennvorrichtung eignet sich besonders zur Batterieabschaltung in einem Kraftfahrzeug.

## Patentansprüche

1. Pyromechanische Trennvorrichtung, insbesondere zur Batterieabschaltung in einem Kraftfahrzeug, mit einem Gehäuse (4), in dem eine elektrisch leitende Stromleiterschiene (2) angeordnet ist, die von einem durch eine pyrotechnische Treibladung (14) angetriebenen Trennmeißel (6) an einer Trennstelle (1) durchtrennbar ausgebildet ist, die Stromleiterschiene (2) an ihrer dem Trennmeißel (6) abgewandten Seite durch einen in das Gehäuse (4) eingeschobenen Riegel (5) eingeklemmt ist und im Riegel (5) im Bereich der Trennstelle (1) ein Aufnahmeraum (15) angeordnet ist, in die der Trennmeißel (6) den von ihm durchtrennten Bereich der Stromleiterschiene (2) umbiegt und der Riegel (5) eine Außenfläche des Gehäuses (4) bildet, **dadurch gekennzeichnet, dass** im Riegel (5) eine Ausbuchtung (13) angeordnet ist, die den Aufnahmeraum (15) mit der Atmosphäre durchschaubar verbindet.

2. Trennvorrichtung nach Anspruch 1, **dadurch gekennzeichnet, dass** die Ausbuchtung (13) eine Bohrung ist.

3. Trennvorrichtung nach Anspruch 1 oder 2, **dadurch gekennzeichnet, dass** die Ausbuchtung (13) durch ein durchsichtiges Material (12) abgedeckt ist.

4. Trennvorrichtung nach Anspruch 3, **dadurch gekennzeichnet, dass** das durchsichtige Material (12) ein durchsichtiger Kunststoff oder ein durchsichtiges Glas ist.

## Claims

1. Pyromechanical separation device, in particular for battery disconnection in a motor vehicle, having a housing (4), in which an electrical conductor rail (2) is arranged, which is configured to be split by a separation chisel (6), driven by a pyrotechnic propellant charge (14), at a separation point (1), wherein the conductor rail (2), on its side facing away from the separation chisel (6), is clamped by a bolt (5) inserted in the housing (4) and a receiving space (15) is disposed in the bolt (5) in the area of the separation point (1), into which the separation chisel (6) bends the separated area of the conductor rail (2) and the bolt (5) forms an outer surface of the housing (4), **characterized in that** a recess (13) is disposed in the bolt (5), transparently connecting the receiving space (15) with the atmosphere.

2. Separation device according to claim 1, **characterized in that** the recess (13) is a bore.

3. Separation device according to claim 1 or 2, **characterized in that** the recess (13) is covered with a transparent material (12).

4. Separation device according to claim 3, **characterized in that** the transparent material (12) is a transparent plastic material or a transparent glass.

## Revendications

1. Dispositif de séparation pyromécanique, en particulier pour la coupure de la batterie dans un véhicule automobile, comprenant un boîtier (4) dans lequel est agencée une barre conductrice (2) qui conduit l'électricité et qui est réalisée de manière à pouvoir être séparée par découpe au moyen d'un couteau de séparation (6) entraîné par une charge propulsive (14) pyrotechnique au niveau d'un emplacement de séparation (1), la barre conductrice (2) est bloquée, sur son côté opposé au couteau de séparation (6), par un verrou (5) introduit dans le boîtier (4), et dans le verrou (5) dans la région de l'emplacement de séparation (1) il est prévu un espace de réception (15) dans lequel le couteau de séparation (6) fait fléchir la zone de la barre conductrice (2) qu'il coupe, et le verrou (5) forme une surface extérieure du boîtier (4), **caractérisé en ce qu'**un creux (13) est ménagé dans le verrou (5), qui relie de manière visible l'espace de réception (15) avec l'atmosphère.

2. Dispositif de séparation selon la revendication 1, **caractérisé en ce que** le creux (13) est un perçage.

3. Dispositif de séparation selon la revendication 1 ou 2, **caractérisé en ce que** le creux (13) est recouvert par un matériau transparent (12).

4. Dispositif de séparation selon la revendication 3, **caractérisé en ce que** le matériau transparent (12) est une matière plastique transparente ou un verre transparent.
